# EUROPÄISCHE PATENTSCHRIFT

(11) **EP 3 425 349 B1**
(45) Veröffentlichungstag und Bekanntmachung des Hinweises auf die Patenterteilung: **05.05.2021**
(21) Anmeldenummer: 18180347.9
(22) Anmeldetag: 28.06.2018
(51) Int. Cl.: G01F 22/02

(54) **BESTIMMUNG EINES GASVOLUMENS IN EINER TANKVORRICHTUNG**
DETERMINATION OF A GAS VOLUME IN A REFUELLING DEVICE
DÉTERMINATION D'UN VOLUME DE GAZ DANS UN DISPOSITIF CITERNE

(30) Priorität: 06.07.2017 DE 102017115166
(43) Veröffentlichungstag der Anmeldung: 09.01.2019
(73) Patentinhaber: ArianeGroup GmbH, 82024 Taufkirchen (DE)
(72) Erfinder: Sebald, Johannes, 28199 Bremen (DE)
(74) Vertreter: Marschall, Stefan

(56) Entgegenhaltungen:
- DE-A1-102014 011 652
- DE-A1-102014 109 836
- DE-C1- 3 540 768
- DE-T2- 60 209 390

## Beschreibung

Die Erfindung betrifft eine Tankvorrichtung für eine Tankflüssigkeit, ein Verfahren zur Bestimmung eines (veränderlichen) Gasvolumens in einer Tankvorrichtung und eine Rakete mit einer Tankvorrichtung zum Einsatz im Weltraum.

Die Menge einer Tankflüssigkeit in einem Tankbehälter wird üblicherweise durch die Höhe des jeweiligen Flüssigkeitsspiegels bestimmt. Bei Schrägstellungen, Geschwindigkeitsänderungen oder Vibrationen eines den Behälter umfassenden Fahrzeugs, Schiffes oder Flugzeugs ergeben sich aus einer derartigen Verfahrensweise Ungenauigkeiten in der Messung. Zudem setzt eine derartige kapazitative Füllstandsmessung eine zusammenhängende Grenzschicht (einen sogenannten Meniskus) zwischen Flüssigkeit und Gasphase sowie eine Anordnung der Flüssigkeit im unteren Teil des Tankbehälters voraus. Bei Tankbehältern von Weltraumraketen sind diese Voraussetzungen nur vor dem Start oder während der Brenndauer des Triebwerks erfüllt, denn nach Abschalten des Triebwerks im Weltraum (während sogenannter "Coasting-Phasen") wird die Flüssigkeit in der Schwerelosigkeit in verschiedene, voneinander durch Gas getrennte Bereiche separiert.

Unterschiedliche Verfahren sind daher in der Diskussion, um das Flüssigkeitsvolumen auf alternative Weise bestimmen zu können:
Beispielsweise wird bei der optischen Absorptionsmessung der Tankbehälter mit einer Lichtquelle durch Mehrfachreflexion ausgeleuchtet. Dabei wird ein Teil der Lichtenergie infolge von Absorption des Lichtes in der Tankflüssigkeit in Wärme umgesetzt. Die verbleibende Lichtmenge wird gemessen und daraus indirekt das vorhandene Flüssigkeitsvolumen bestimmt.

Dieses Verfahren setzt voraus, dass das gesamte Tankvolumen durch Mehrfachreflexionen ausgeleuchtet ist und dass die gemessene Lichtintensität tatsächlich dem Mittelwert entspricht (der Tank muss wie eine Ulbricht-Kugel wirken). Das Messverfahren erfordert außerdem eine aufwendige optische Instrumentierung, die auch noch die hohen mechanischen und thermischen Anforderungen innerhalb einer Rakete erfüllen muss.

Ein weiteres optisches Verfahren wurde von Ryan M. Sullenberger, Wesley M. Munoz, Matt P. Lyon, Kenny Vogel, Azer P. Yalin, Valentin Korman und Kurt A. Polzin in der Veröffentlichung "Optical Mass Gauging System for Measuring Liquid Levels in a Reduced Gravity Environment" (https://ntrs.nasa.gov/archive/nasa/casi.ntrs.../20100033282.pdf) beschrieben. Dieses Vorgehen ist jedoch technisch noch erheblich aufwendiger und empfindlicher, weil hier ein interferometrisches Verfahren eingesetzt wird.

In der Druckschrift DE 33 11 982 A1 werden eine Vorrichtung und ein Verfahren zur Bestimmung des Flüssigkeitsvolumens in einem geschlossenen Behälter offenbart. Die Vorrichtung umfasst dabei eine Membran, die wie eine Lautsprechermembran ausgebildet ist und an die von außen mittels elektromotorischer Mittel periodisch ein Impulses angelegt werden kann. Die Periode einer resultierenden Eigenschwingung der Membran kann dann erfasst und daraus ein Gas- und ein Flüssigkeitsvolumen berechnet werden. Die Vorrichtung und das Verfahren sind für Fahrzeuge ausgelegt und nicht für die Anwendung unter Schwerelosigkeit und mit extremen Druckänderungen konzipiert.

Die Druckschrift DE 10 2014 109 836 A1 offenbart eine Bestimmung des Volumens eines Nutzmediums, das zusammen mit einem Füllmedium in einem Vorratsbehälter enthalten ist. Aus der Druckschrift DE 10 2014 011 652 A1 ist eine Technik zur Bestimmung des Füllgradeseines geschlossenen Behälters bekannt.

Die vorliegende Erfindung hat die Aufgabe, eine Technik zur Bestimmung eines veränderlichen Inhalts einer Tankvorrichtung unter Vermeidung der oben genannten Nachteile bereitzustellen, die sich insbesondere für eine Verwendung in Weltraumraketen eignet und dabei solide und einfach in der Installation ist.

Die Aufgabe wird gelöst durch eine Tankvorrichtung gemäß Anspruch 1, eine Rakete nach Anspruch 8 und ein Verfahren gemäß Anspruch 9. Bevorzugte Ausführungsformen werden in den Unteransprüchen, der Beschreibung und den Figuren offenbart.

Eine erfindungsgemäße Tankvorrichtung dient der Aufnahme bzw. Bereitstellung einer Tankflüssigkeit (die insbesondere kryogener Treibstoff sein kann). Sie umfasst einen Druckbehälter, in dessen Innerem eine erste Kammer und eine zweite Kammer ausgebildet sind. Als erste und zweite Kammer sind dabei zueinander disjunkte Volumenbereiche zu verstehen. Insbesondere kann die erste Kammer die zweite Kammer ganz oder teilweise umgeben, oder die zweite Kammer kann die erste Kammer ganz oder teilweise umgeben.

Die erste Kammer ist dazu eingerichtet, die Tankflüssigkeit und/oder ein Bedrückungsgas aufzunehmen bzw. zu enthalten, das zum Austreiben der Tankflüssigkeit aus der ersten Kammer und/oder zur Regulierung einer Temperatur in der ersten Kammer zu- und/oder abgelassen werden kann. Ein derartiges Bedrückungsgas kann beispielsweise ein Inertgas wie Stickstoff oder Helium sein.

Die zweite Kammer ist gegenüber der ersten Kammer abgeschlossen, ein Gas- oder Flüssigkeitsaustausch zwischen den Kammern ist also unmöglich.

Dabei stehen die erste und die zweite Kammer durch mindestens eine sie trennende schwingfähige Membran in Wirkverbindung; eine Druckänderung in der ersten Kammer bewirkt somit eine Volumenänderung in der zweiten Kammer und umgekehrt, so dass sich jeweils ein Gleichgewichtszustand einstellt, in dem in beiden Kammern derselbe Druck herrscht (der hier auch als der Gleichgewichtsdruck bezeichnet wird).

Die Tankvorrichtung weist zudem mindestens ein steuerbares Element zum Erzeugen eines Druckstoßes im Druckbehälter auf; der Druckstoß kann insbesondere in die erste Kammer oder aus der ersten Kammer gerichtet sein und/oder eine Pulszeit aufweisen, die beispielsweise höchstens 0,5 Sekunden, höchstens 0,2 Sekunden oder sogar höchstens 0,1 Sekunden betragen kann.

Aufgrund der Wirkverbindung der ersten und der zweiten Kammer wird die Membran durch einen derartigen Druckstoß in eine Schwingung versetzt, was wiederum Druckschwingungen in der ersten und in der zweiten Kammer zur Folge hat. Ein Drucksensor der Tankvorrichtung ist dazu eingerichtet, eine derartige Druckschwingung in der ersten oder der zweiten Kammer zu erfassen, beispielsweise in Form einer Mehrzahl an zu verschiedenen Zeitpunkten (nacheinander) gemessenen Druckwerten. Auf diese Weise kann eine gedämpfte periodische Schwingung der Membran erfasst werden. Der Drucksensor kann als Piezoelement bzw. Piezosensor ausgebildet und/oder dazu eingerichtet sein, auch zum Bewirken des Druckstoßes bzw. zur Anregung einer Druckschwingung zu dienen; insbesondere kann das steuerbare Element den Drucksensor umfassen.

Das steuerbare Element kann beispielsweise mindestens ein Piezoelement umfassen, das z.B. an einer Tankwand befestigt und/oder (ganz oder teilweise) in eine Tankwand eingebaut sein kann. Gemäß einer bevorzugten Ausführungsform umfasst das steuerbare Element ein steuerbares Ventil zur Gaszufuhr und/oder zum Gasauslass in die bzw. aus der ersten Kammer: Mittels eines derartigen Ventils kann somit der (Gas-)Druck in der ersten Kammer (bzw. im darin enthaltenen Gasraum) beeinflusst werden. Das steuerbare Ventil kann an eine Steuerung angeschlossen sein, die es zum Bewirken des Druckstoßes für eine vorbestimmte Pulszeit öffnet (und sogleich wieder schließt).

Weiterhin weist eine erfindungsgemäße Tankvorrichtung einen oder mehrere Temperatursensor(en) zur Messung (jeweils) einer im Druckbehälter herrschenden Temperatur auf.

Eine Auswertungseinrichtung der Tankvorrichtung ist dazu vorgesehen, aus einer erfassten Druckschwingung (z.B. aus deren sich aus den Messwerten ergebenden Frequenz und/oder Amplitude um einen sich einstellenden Gleichgewichtsdruck) und mindestens einer mit dem/den Temperatursensor/en gemessenen Temperatur ein Gasvolumen im Druckbehälter zu bestimmen, vorzugsweise mittels einer unter Berücksichtigung eines oder mehrerer physikalischer Eigenschaften bzw. spezifischen/spezifischer Parameter(s) des Gases bestimmten Funktionsvorschrift; als "Bestimmen eines Gasvolumens" wird dabei in dieser Schrift auch die Bestimmung eines Wertes verstanden, aus dem das Gasvolumen mittels einer bijektiven Funktionsvorschrift berechnet werden kann; Entsprechendes gilt (s.u.) für ein "Bestimmen eines Volumens einer Tankflüssigkeit".

Das Gasvolumen kann das (zum Zeitpunkt der Bestimmung aktuelle) Volumen des Gases in der ersten Kammer und/oder im Druckbehälter (insgesamt) sein.

Die Auswertungseinrichtung kann ferner dazu eingerichtet sein, das Volumen der im Druckbehälter bzw. in der ersten Kammer (aktuell) enthaltenen Tankflüssigkeit zu bestimmen, beispielsweise aus dem bestimmten Gasvolumen, vorzugsweise unter Berücksichtigung eines vorbekannten Innenraumvolumens des Druckbehälters eines sich nach einem Abklingen der Druckschwingung eingestellten Volumens der ersten und/oder der zweiten Kammer.

Eine erfindungsgemäße Rakete ist dazu eingerichtet, im Weltraum eingesetzt zu werden, vorzugsweise von der Erde ins Weltall zu fliegen. Sie umfasst mindestens ein Triebwerk sowie zu dessen Versorgung mit Treibstoff mindestens eine erfindungsgemäße Tankvorrichtung gemäß einer der in dieser Schrift offenbarten Ausführungsformen.

Ein erfindungsgemäßes Verfahren dient der Bestimmung eines (veränderlichen, bei Durchführung des Verfahrens aktuellen) Gasvolumens in einem Druckbehälter einer Tankvorrichtung. Der Druckbehälter weist dabei eine erste Kammer für eine Tankflüssigkeit (die insbesondere kryogener Treibstoff sein kann) sowie eine zweite Kammer auf. Erste und zweite Kammer sind disjunkte Volumenbereiche (insbesondere kann die erste Kammer die zweite Kammer ganz oder teilweise umgeben oder umgekehrt). Sie sind gegeneinander abgeschlossen und stehen (wie oben beschrieben) durch mindestens eine sie trennende schwingfähige Membran in Wirkverbindung, so dass also eine Druckänderung in der ersten Kammer eine Volumenänderung der zweiten Kammer bewirkt und umgekehrt, bis sich jeweils ein Gleichgewichtszustand einstellt, in dem in beiden Kammern derselbe Druck herrscht (der hier auch als der Gleichgewichtsdruck bezeichnet wird).

Das Verfahren umfasst ein Messen einer Temperatur im Druckbehälter sowie ein Anregen einer Druckschwingung in der ersten Kammer mittels eines steuerbaren Elements, das beispielsweise ein (z.B. an einer Tankwand befestigtes oder (ganz oder teilweise) in eine Tankwand eingebautes) Piezoelement und/oder mindestens ein steuerbares Ventil umfassen kann. Insbesondere kann das Anregen der Druckschwingung ein (schlagartiges) Zuführen und/oder Ablassen von Gas in die bzw. aus der ersten Kammer durch ein derartiges Ventil des Druckbehälters umfassen. Wie oben beschrieben kann das Anregen insbesondere ein Öffnen eines solchen Ventils für eine vorbestimmte Pulszeit umfassen (die beispielsweise höchstens 0,5 Sekunden, höchstens 0,2 Sekunden oder sogar höchstens 0,1 Sekunden betragen kann). Alternativ oder zusätzlich kann das Anregen der Druckschwingung mittels mindestens eines Impulses eines umfassten Piezoelements erfolgen.

Dem erfindungsgemäßen Verfahren zufolge wird die Druckschwingung in der ersten und/oder zweiten Kammer erfasst, beispielsweise in Form einer Mehrzahl an nacheinander gemessenen Druckwerten. Aus der erfassten Druckschwingung und der gemessenen Temperatur wird ein Gasvolumen im Druckbehälter bestimmt; das Gasvolumen kann insbesondere das (zum Zeitpunkt der Bestimmung aktuelle) Volumen des Gases in der ersten Kammer und/oder im Druckbehälter (insgesamt) sein.

Vorzugsweise erfolgt das Bestimmen mittels einer unter Berücksichtigung eines oder mehrerer physikalischer Eigenschaften bzw. spezifischen/spezifischer Parameter(s) des Gases bestimmten Funktionsvorschrift.

Gemäß einer vorteilhaften Ausführungsform umfasst das Verfahren zudem das Bestimmen des Volumens der im Druckbehälter (in der ersten Kammer) enthaltenen Tankflüssigkeit, beispielsweise unter Berücksichtigung eines vorbekannten Innenraumvolumens des Druckbehälters und/oder eines sich nach einem Abklingen der Druckschwingung eingestellten Volumens der ersten und/oder der zweiten Kammer.

Insbesondere eignet sich das erfindungsgemäße Verfahren zur Bestimmung eines Gasvolumens im Druckbehälter einer erfindungsgemäßen Tankvorrichtung gemäß einer der in dieser Schrift offenbarten Ausführungsformen.

Eine erfindungsgemäße Tankvorrichtung, eine erfindungsgemäße Rakete und ein erfindungsgemäßes Verfahren ermöglichen eine zuverlässige Bestimmung eines Tankinhalts auch unabhängig von äußeren Bedingungen, beispielsweise von Erschütterungen, Beschleunigung oder Abbremsung der Tankvorrichtung und vom Einfluss der Gravitationskraft. Erfindungsgemäß kann dabei ein jeweils aktuelles Gasvolumen im Druckbehälter bestimmt werden, indem das zusammen mit der Tankflüssigkeit in der ersten Kammer befindliche Gas gezielt angeregt sowie anschließend ein durch diese Anregung induziertes transientes Antwortverhalten in Form von Druckschwankungen in der ersten bzw. der zweiten Kammer gemessen und ausgewertet wird. Die dazu erforderlichen bzw. dabei eingebundenen technischen Mittel sind robust und mit geringem Aufwand zu installieren.

Die erfindungsgemäß mögliche präzise Ermittlung der Restflüssigkeit im Druckbehälter insbesondere am Ende einer Mission ermöglicht zudem eine genauere Modellbildung für zukünftige Missionen, die eine Verringerung der Sicherheitszuschläge bei den zu tankenden Flüssigkeiten und damit eine Masseneinsparung erlaubt.

Vorzugsweise umfasst eine erfindungsgemäße Vorrichtung eine gasdurchlässige Abschirmungseinrichtung, die dazu eingerichtet ist, einen Kontakt der Membran mit Tankflüssigkeit in der ersten Kammer zu verhindern oder zumindest zu reduzieren. Analog ist die Membran bei einem erfindungsgemäßen Verfahren an einer der ersten Kammer zugewandten Seite vorzugsweise mindestens teilweise frei (also unbedeckt) von Tankflüssigkeit. Auf diese Weise kann ein optimales Schwingungsverhalten der Membran gewährleistet werden.

Gemäß einer vorteilhaften Ausführungsform der vorliegenden Erfindung umfasst das steuerbare Element zum Bewirken des Druckstoßes ein steuerbares Ventil, das (zudem) an eine Gaszufuhr zum Austreiben der Tankflüssigkeit aus dem Druckbehälter (beispielsweise zum Triebwerk) und/oder an einen Gasauslass zur Druckregelung im Druckbehälter, beispielsweise zum Bewirken einer Kühlung der Tankflüssigkeit, angeschlossen ist. Somit kann das Ventil eine Mehrfachfunktion erfüllen, so dass die Volumenbestimmung also kein eigenes, separates Ventil als zusätzliches Bauteil erfordert. Die Tankvorrichtung kann dadurch besonders schlicht und robust gehalten werden.

Analog kann der Drucksensor zum Erfassen der Druckschwingung Teil einer Druckregelungsvorrichtung der Tankvorrichtung zur Regelung eines Innendrucks im Druckbehälter sein, was ebenfalls eine erforderliche Komplexität und damit einen Herstellungsaufwand für die Tankvorrichtung minimiert und eine hohe Robustheit ermöglicht.

Die zweite Kammer kann nach einem einmaligen Befüllen mit Gas (beispielsweise bevor eine Rakete, welche die Tankvorrichtung umfasst, gestartet wird) unter einem festgelegten Druck versiegelt sein, so dass dann die in der zweiten Kammer befindliche Masse an Gas also nicht mehr geändert wird. Das Gas kann insbesondere Helium sein oder umfassen.

Alternativ kann die Tankvorrichtung ein Ventil aufweisen, durch das Gas in die zweite Kammer eingeleitet und/oder aus der zweiten Kammer abgelassen werden kann. Dieses Ventil, das in dieser Schrift auch als "zweites" Ventil bezeichnet wird, ermöglicht dann eine Einstellung eines für die Erhaltung der Schwingfähigkeit der Membran optimalen Volumens der zweiten Kammer, beispielsweise nach einer Gaszufuhr in die oder einem Gasablassen aus der ersten Kammer, vorzugsweise während einer (zumindest im Wesentlichen) schwingungsfreien Phase der Membran. Die Tankvorrichtung kann einen Drucksensor zur Messung eines Drucks in der zweiten Kammer umfassen und/oder eine Steuerungseinrichtung zur Steuerung eines solchen zweiten Ventils. Eine solche Steuerungseinrichtung des zweiten Ventils kann dazu eingerichtet sein, mit einer Steuerungseinrichtung zur Steuerung eines (ersten) Ventils zur Gaszufuhr oder zum Gasablassen in die bzw. aus der ersten Kammer zu kommunizieren (das wie erwähnt insbesondere mit dem genannten Ventil zum Bewirken eines Druckstoßes übereinstimmen kann), oder die Tankvorrichtung kann eine gemeinsame Steuerungseinrichtung zur Steuerung beider genannter Ventile umfassen.

Entsprechend umfasst eine vorteilhafte Ausführungsvariante eines erfindungsgemäßen Verfahrens ein Einrichten (also Bewirken) eines Volumens der zweiten Kammer, beispielsweise durch ein Zuführen oder Ablassen von Gas durch ein (zweites) Ventil in die bzw. aus der zweite(n) Kammer. Das Einrichten kann eine Messen eines Drucks in der zweiten Kammer umfassen und/oder insbesondere nach einer Gaszufuhr (z.B. zum Austreiben der Tankflüssigkeit aus dem Druckbehälter) oder einem Gasablassen (z.B. zum Bewirken einer Kühlung) in die bzw. aus der erste(n) Kammer erfolgen und/oder während einer (zumindest im Wesentlichen) schwingungsfreien Phase der Membran.

Vorzugsweise ist die Auswertungseinheit einer erfindungsgemäßen Tankvorrichtung dazu eingerichtet, aus einem bestimmten Gasvolumen bzw. einem daraus berechneten Volumen an Tankflüssigkeit im Druckbehälter sowie einer gemessenen Temperatur im Druckbehälter die Masse an Tankflüssigkeit im Druckbehälter zu bestimmen; als "Bestimmen der Masse" wird dabei in dieser Schrift auch die Bestimmung eines Wertes verstanden, aus dem die Masse mittels einer bijektiven Funktionsvorschrift berechnet werden kann. Entsprechend umfasst ein erfindungsgemäßes Verfahren vorzugsweise ein derartiges Bestimmen der Masse an Tankflüssigkeit im Druckbehälter.

Eine Steuerung eines Triebwerks (das beispielsweise Teil einer erfindungsgemäßen Rakete sein kann) kann dann dazu eingerichtet sein, das Triebwerk in Abhängigkeit von der bestimmten Masse an Treibstoff im Druckbehälter zu zünden bzw. (ggf.) dessen Zündung zu unterbinden und/oder ein Verhältnis von Treibstoff zu einer Oxidatormenge im Druckbehälter abhängig vom Füllstand des Druckbehälters (insbesondere während des Fluges) zu ändern. So kann eine Zündung ohne ausreichende Treibstoff- bzw. Oxidatormengen und die damit verbundene Gefahr einer Explosion vermieden werden, bzw. es kann während des Fluges ein optimales Treibstoff/Oxidatorverhältnis eingestellt werden.

Gemäß einer vorteilhaften Ausführungsform wird das Anregen der Druckschwingung in einem erfindungsgemäßen Verfahren unter Schwerelosigkeit, unter Mikro-Gravitationsbedingung (insbesondere jenseits der Erdatmosphäre beispielsweise nach Abschalten mindestens eines Triebwerkes) und/oder während einer Beschleunigung einer die Tankvorrichtung enthaltenden Rakete durchgeführt.

Im Folgenden wird ein bevorzugtes Ausführungsbeispiel der Erfindung anhand einer Zeichnung näher erläutert. Es versteht sich, dass eine erfindungsgemäße Tankvorrichtung nicht alle der gezeigten Komponenten aufweisen muss bzw. weitere Elemente enthalten kann.

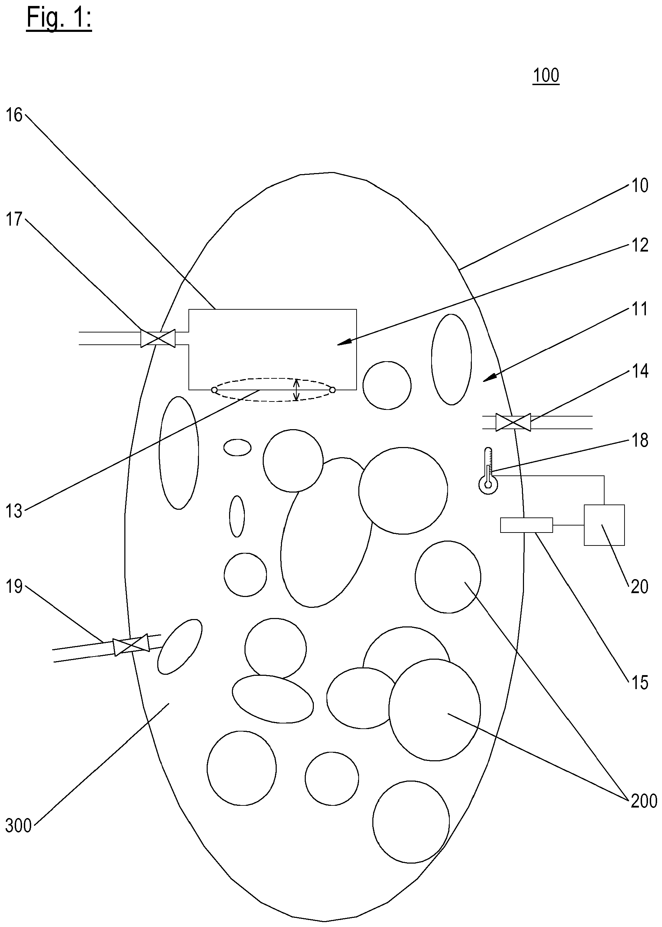

Schematisch zeigt
- Figur 1: eine Tankvorrichtung gemäß einer exemplarischen Ausführungsform der vorliegenden Erfindung.

Die in der Figur 1 dargestellte Tankvorrichtung 100 umfasst einen Druckbehälter 10, in dessen Innerem eine erste Kammer 11 und eine zweite Kammer 12 ausgebildet sind, von denen die erste Kammer 11 die zweite Kammer 12 im Wesentlichen vollständig umgibt. Die erste und die zweite Kammer sind dabei gegeneinander abgeschlossen, und sie stehen durch eine sie trennende schwingfähige Membran 13 in Wirkverbindung. Eine Druckänderung in der ersten Kammer 11 bewirkt somit eine Reaktion der Membran (z.B. Dehnung in die eine oder andere Richtung wie in der Figur durch den Doppelpfeil angedeutet) und dadurch eine Volumenänderung der zweiten Kammer 12 und umgekehrt. Auf die Dauer stellt sich jeweils ein Gleichgewichtszustand ein, in dem in beiden Kammern derselbe (Gleichgewichts-)Druck herrscht.

Die erste Kammer 11 ist teilweise mit einer Tankflüssigkeit 200 (beispielsweise kryogenem Treibstoff, insbesondere für ein Raketentriebwerk) gefüllt; in der dargestellten Situation befindet sich die Tankvorrichtung unter mindestens annähernder Schwerelosigkeit, daher bildet die Tankflüssigkeit 200 keinen zusammenhängenden Flüssigkeitsspiegel aus, sondern ist in eine Vielzahl an Tropfen aufgeteilt. Neben der Tankflüssigkeit 200 enthält die erste Kammer 11 ein Gas 300 (z.B. ein Inertgas wie Helium oder Stickstoff bzw. ein aus der Flüssigkeit stammendes Gas).

Die zweite Kammer 12 ist von einem stabilen Gehäuse 16 und der Membran 13 umgeben und enthält ein Gas (das z.B. Helium und/oder dasselbe Gas sein kann, wie es die erste Kammer 11 enthält). Durch ein (vorzugsweise steuerbares) Ventil 17 kann im gezeigten Ausführungsbeispiel Gas in die zweite Kammer 12 zugeführt und/oder aus ihr abgelassen werden; bei geschlossenem Ventil ist das Gasvolumen in der zweiten Kammer 12 abgeschlossen. Insbesondere kann mittels des Ventils 17 (z.B. nach einer Gaszufuhr oder einem Gasablassen in die bzw. aus der ersten Kammer) ein vorbestimmtes Volumen der zweiten Kammer 12 eingestellt und damit eine Ausformung bzw. ein Zustand der Membran 13 bewirkt werden, die/der bei deren Anregung eine vorteilhafte Schwingungsamplitude ermöglicht. Außerdem könnte mittels des Ventils 17 auch Gas aus der ersten Kammer 11 in die zweite Kammer 12 geleitet werden. Gemäß einer alternativen (nicht gezeigten) Ausführungsform enthält die zweite Kammer nach einem Befüllen und Versiegeln eine unveränderliche Menge (Masse) an Gas (z.B. Helium), umfasst also kein Ventil 17.

Eine (nicht dargestellte) Steuerung des Ventils 17 kann mit einer (ebenfalls nicht dargestellten) Steuerung mindestens eines Ventils gekoppelt sein, mittels dessen Gas (z.B. zum Zwecke des Austreibens der Tankflüssigkeit 200 aus dem Druckbehälter) in die erste Kammer eingeleitet werden kann oder durch das Gas 300 (z.B. zum Bewirken einer Kühlung) aus der ersten Kammer abgelassen werden kann und/oder das dazu eingerichtet ist, einen Druckstoß im Druckbehälter zu bewirken:
Die Tankvorrichtung 100 weist ein solches Ventil 14 auf, das erfindungsgemäß dazu eingerichtet ist, einen derartigen Druckstoß im Druckbehälter 10 zur bewirken, z.B. indem es für eine vorgegebene Pulszeit (die beispielsweise höchstens 0,5 Sekunden, höchstens 0,2 Sekunden oder sogar höchstens 0,1 Sekunden betragen kann) geöffnet und wieder geschlossen wird, so dass durch das geöffnete Ventil 14 Gas 300 in die erste Kammer 11 eindringen oder aus ihr austreten kann (je nach anliegendem Druck auf beiden Seiten des Ventils). Da die in den Kammern 11 und 12 eingeschlossenen Gase zusammen mit der eine Masse aufweisenden Membran 13 innerhalb des geschlossenen Druckbehälters 10 ein schwingfähiges System bilden, hat ein derartiger Druckstoß eine Schwingung der Membran 13 und damit je eine Druckschwingung in der ersten und der zweiten Kammer zur Folge (wobei die Druckschwingungsamplituden in den beiden Kammern zueinander komplementär sind).

Die in der Figur gezeigte Tankvorrichtung 100 umfasst ferner einen Temperatursensor 18 zur Messung einer im Druckbehälter (insbesondere in der ersten Kammer 11) herrschenden Temperatur. Ein zweiter Temperatursensor kann zur Temperaturmessung in der Kammer 12 angeordnet sein (hier nicht gezeichnet). Jeweils gemessene Temperaturwerte können im dargestellten Ausführungsbeispiel an die Auswertungseinrichtung 20 übermittelt werden.

Ein Drucksensor 15 ist im dargestellten Beispiel dazu eingerichtet, den sich während der Druckschwingung in der ersten Kammer periodisch ändernden Druck (mehrmals nacheinander) zu messen, so die Druckschwingung (einschließlich eines sich einstellenden Gleichgewichtsdrucks) in der ersten Kammer 11 zu erfassen und zugehörige Messwerte an eine Auswertungseinrichtung 20 zu übermitteln. Der Drucksensor kann (z.B. als Piezosensor) auch zur Anregung dienen, also ein "Ping" an den Gasraum geben. Die Auswertungseinrichtung 20 ist vorzugsweise dazu eingerichtet, aus der Druckschwingung, bzw. aus den erhaltenen, die Druckschwingung beschreibenden Messwerten sowie einer mit dem Temperatursensor 18 gemessenen (aktuellen) Temperatur ein Gasvolumen im Druckbehälter 10 zu bestimmen, z.B. ein Volumen an Gas 300 in der ersten Kammer 11 und somit ein Volumen an Gas im Druckbehälter 10 insgesamt. Die Auswertungseinrichtung kann ferner dazu eingerichtet sein, ein Volumen an Tankflüssigkeit 200 im Druckbehälter 10 (in der ersten Kammer 11) zu berechnen, vorzugsweise aus dem zuvor bestimmten Gasvolumen. Diese Berechnung kann beispielsweise unter Berücksichtigung eines vorbekannten Innenraumvolumens des Druckbehälters und/oder eines sich nach einem Abklingen der Druckschwingung eingestellten Volumens der ersten Kammer 11 und/oder der zweiten Kammer 12 unter Berücksichtigung physikalischer Konstanten des Gases erfolgen.

Die Auswertungseinrichtung 20 kann zudem dazu eingerichtet sein, unter Berücksichtigung einer vom Temperatursensor 18 gemessenen (aktuellen) Temperatur eine Masse der im Druckbehälter (nämlich in der ersten Kammer 11) enthaltenen Tankflüssigkeit 200 zu berechnen (beispielsweise aus deren Volumen und Dichte).

Das Ventil 14 zum Bewirken eines Druckstoßes kann vorzugsweise an eine Gaszufuhr zum Austreiben der Tankflüssigkeit 200 aus dem Druckbehälter in eine zu einem Triebwerk führende Zuleitung 19 angeschlossen oder anzuschließen sein, und/oder an einen Gasauslass zum Bewirken einer Kühlung der Tankflüssigkeit 200.

Somit kann das Ventil 14 außer dem Bewirken eines Druckstoßes weitere Funktionen erfüllen, muss also kein zusätzlich für die Bestimmung des Gasvolumens im Druckbehälter installiertes Ventil sein. Damit kann ein relativ einfacher Aufbau der Tankvorrichtung realisiert werden, der einen geringen Herstellungsaufwand und eine hohe Robustheit ermöglicht.

Der Drucksensor 15 und/oder der Temperatursensor 18 können/kann mit einer (nicht gezeigten) Steuerung eines Ventils verbunden sein, durch das eine Gaszufuhr zum Austreiben der Tankflüssigkeit und/oder ein Gasablassen zur Kühlung erfolgen kann (wobei ein derartiges Ventil wie erwähnt mit dem Ventil 14 zum Bewirken eines Druckstoßes übereinstimmen kann). Der Drucksensor und/oder der Temperatursensor können/kann also neben einem Beitragen zur Bestimmung eines Gasvolumens im Druckbehälter jeweils mindestens eine weitere Funktion erfüllen, beispielsweise zur Regelung eines jeweils erforderlichen Druck- und/oder Temperaturniveaus im Druckbehälter.

Offenbart ist eine Tankvorrichtung 100 für eine Tankflüssigkeit 200. Die Tankvorrichtung umfasst einen Druckbehälter 10, in dessen Innerem eine erste Kammer 11 für die Tankflüssigkeit und zweite Kammer 12 angeordnet sind. Erste und zweite Kammer sind gegeneinander abgeschlossen und stehen durch mindestens eine sie trennende schwingfähige Membran 13 in Wirkverbindung. Das Gehäuse 16 der zweiten Kammer 12 kann innen am Druckbehälter 10 befestigt oder Teil des Druckbehälters 10 sein. Die Tankvorrichtung umfasst ferner ein steuerbares Element 14 zum Bewirken eines Druckstoßes im Druckbehälter 10, einen Drucksensor 15 zur Erfassung einer aus dem Druckstoß resultierenden Druckschwingung und einen Temperatursensor 18 zum Messen einer im Druckbehälter herrschenden Temperatur. Eine Auswertungseinrichtung 20 der Tankvorrichtung 100 ist dazu eingerichtet, aus einer jeweils erfassten Druckschwingung und einer mit dem Temperatursensor 18 gemessenen Temperatur ein aktuelles Gasvolumen im Druckbehälter 10 zu bestimmen. Daraus kann die Masse der vorhandenen Tankflüssigkeit 200 berechnet werden.

Offenbart sind ferner eine Rakete zum Einsatz im Weltraum und ein Verfahren zur Bestimmung eines (veränderlichen) Gasvolumens in einem Druckbehälter einer Tankvorrichtung.

### Bezugszeichen

- 10: Druckbehälter
- 11: erste Kammer
- 12: zweite Kammer
- 13: Membran
- 14: Ventil zum Bewirken eines Druckstoßes
- 15: Drucksensor
- 16: Gehäuse der zweiten Kammer 12
- 17: Ventil zur Gaszufuhr und/oder zum Gasablassen in die bzw. aus der zweiten Kammer 12
- 18: Temperatursensor
- 19: Zuleitung zum Triebwerk
- 20: Auswertungseinrichtung

- 100: Tankvorrichtung
- 200: Tankflüssigkeit
- 300: Gas

## Patentansprüche

1. Tankvorrichtung (100) für eine Tankflüssigkeit, wobei die Tankvorrichtung aufweist:
- einen Druckbehälter (10), in dessen Innerem eine erste Kammer (11) für die Tankflüssigkeit (200) und eine zweite Kammer (12) ausgebildet sind, wobei die erste und die zweite Kammer gegeneinander abgeschlossen sind und durch mindestens eine sie trennende schwingfähige Membran (13) in Wirkverbindung stehen;
- mindestens ein steuerbares Element (14) zum Bewirken eines Druckstoßes im Druckbehälter;
- einen Drucksensor (15) zur Erfassung einer aus dem Druckstoß resultierenden Druckschwingung in der ersten und/oder zweiten Kammer;
- einen Temperatursensor (18) zum Messen einer Temperatur im Druckbehälter (10) und
- eine Auswertungseinrichtung (20) zum Bestimmen eines Gasvolumens im Druckbehälter (10) aus einer erfassten Druckschwingung und einer gemessenen Temperatur,
**dadurch gekennzeichnet, dass**
das steuerbare Element ein steuerbares Ventil umfasst, durch das zum Bewirken eines Druckstoßes Gas in die erste Kammer eingelassen und/oder aus der ersten Kammer abgelassen werden kann.

2. Tankvorrichtung nach Anspruch 1, wobei das steuerbare Ventil (14) an eine Gaszufuhr zum Austreiben der Tankflüssigkeit aus dem Druckbehälter (10) oder an einen Gasauslass zur Druckregelung, insbesondere zum Bewirken einer Kühlung der Tankflüssigkeit angeschlossen ist.

3. Tankvorrichtung nach einem der vorhergehenden Ansprüche, die zudem ein Ventil (17) zur Gaszufuhr und/oder zum Gasauslass in die bzw. aus der zweiten Kammer (12) aufweist.

4. Tankvorrichtung gemäß einem der vorhergehenden Ansprüche, wobei die Auswertungseinrichtung (20) ferner dazu eingerichtet ist, ein Volumen an Tankflüssigkeit (300) im Druckbehälter (10) zu bestimmen.

5. Tankvorrichtung gemäß einem der vorhergehenden Ansprüche, wobei die Auswertungseinrichtung (20) ferner dazu eingerichtet ist, eine Masse an Tankflüssigkeit (200) in der ersten Kammer (10) zu bestimmen.

6. Tankvorrichtung gemäß einem der vorhergehenden Ansprüche, wobei die Tankflüssigkeit (200) ein kryogener Treibstoff ist.

7. Tankvorrichtung gemäß einem der vorstehenden Ansprüche, wobei der Drucksensor (15) als Piezosensor ausgebildet und/oder dazu eingerichtet ist, zur Anregung zu dienen.

8. Tankvorrichtung gemäß einem der vorstehenden Ansprüche, wobei ein Gehäuse (16) der zweiten Kammer innen am Druckbehälter (10) befestigt oder Teil des Druckbehälters (10) ist.

9. Rakete zum Einsatz im Weltraum, die ein Triebwerk sowie zu dessen Versorgung mit Treibstoff wenigstens eine Tankvorrichtung gemäß einem der vorhergehenden Ansprüche aufweist.

10. Verfahren zur Bestimmung eines Gasvolumens in einem Druckbehälter (10) einer Tankvorrichtung, wobei der Druckbehälter eine erste Kammer (11) für eine Tankflüssigkeit (200) sowie eine zweite Kammer (12) aufweist, wobei die erste und die zweite Kammer gegeneinander abgeschlossen sind und durch mindestens eine sie trennende schwingfähige Membran (13) in Wirkverbindung stehen, und wobei das Verfahren umfasst:
- anregen einer Druckschwingung in der ersten Kammer (11);
- erfassen einer Druckschwingung in der ersten und/oder zweiten Kammer;
- messen einer Temperatur im Druckbehälter; und
- bestimmen des Gasvolumens im Druckbehälter (10) aus einer erfassten Druckschwingung und einer gemessenen Temperatur
**dadurch gekennzeichnet, dass**
das Anregen der Druckschwingung durch Zuführen und/oder Ablassen von Gas (300) in die bzw. aus der ersten Kammer durch ein steuerbares Ventil (14) des Druckbehälters erfolgt.

11. Verfahren gemäß Anspruch 10, das zudem ein Bestimmen eines Volumens an Tankflüssigkeit (200) in der ersten Kammer (11)und/oder ein Bestimmen einer Masse der Tankflüssigkeit (200) in der ersten Kammer (11) umfasst.

12. Verfahren gemäß einem der Ansprüche 10 oder 11, das zudem vor dem Anregen der Druckschwingung ein Einrichten eines Volumens der zweiten Kammer (12) umfasst.

13. Verfahren gemäß einem der Ansprüche 10 bis 12, wobei das Anregen der Druckschwingung unter Schwerelosigkeit, Mikro-Gravitationsbedingung und/oder während einer Beschleunigung einer die Tankvorrichtung enthaltenen Rakete durchgeführt wird.

14. Verfahren gemäß einem der Ansprüche 10 bis 13, wobei die Tankflüssigkeit (200) ein kryogener Treibstoff ist.

## Claims

1. A tank device (100) for a tank liquid, wherein the tank device has:
- a pressure vessel (10), in the interior of which are formed a first chamber (11) for the tank liquid (200), and a second chamber (12), wherein the first and second chambers are closed off from one another, and are in operative connection by means of at least one vibratory membrane (13) that separates them;
- at least one controllable element (14), for the effectuation of a pressure surge in the pressure vessel;
- a pressure sensor (15), for the detection of a pressure oscillation of the first and/or second chamber resulting from the pressure surge;
- a temperature sensor (18), for the measurement of a temperature in the pressure vessel (10), and
- an evaluation device (20), for the determination of a gas volume in the pressure vessel (10) from a detected pressure oscillation and a measured temperature,
**characterised in that**,
the controllable element comprises a controllable valve, by means of which gas can be admitted to, and/or discharged from, the first chamber, for the effectuation of a pressure surge.

2. The tank device according to Claim 1, wherein the controllable valve (14) is connected to a gas supply for the expulsion of the tank liquid from the pressure vessel (10), or to a gas outlet for purposes of pressure regulation, in particular for the effectuation of a cooling of the tank liquid.

3. The tank device according to one of the preceding claims, which in addition has a valve (17) for the supply of gas, and/or the outlet of gas, into or from the second chamber (12) respectively.

4. The tank device according to one of the preceding claims, wherein the evaluation device (20) is furthermore equipped for the purpose of determining a volume of tank liquid (300) in the pressure vessel (10).

5. The tank device according to one of the preceding claims, wherein the evaluation device (20) is furthermore equipped for the purpose of determining a mass of tank liquid (200) in the first chamber (10).

6. The tank device according to one of the preceding claims, wherein the tank liquid (200) is a cryogenic propellant.

7. The tank device according to one of the preceding claims, wherein the pressure sensor (15) is designed as a piezo sensor, and/or is equipped for the purpose of excitation.

8. The tank device according to one of the preceding claims, wherein a housing (16) of the second chamber is attached internally to the pressure vessel (10), or is part of the pressure vessel (10).

9. A rocket for deployment in space, which has an engine and, for purposes of supplying the engine with propellant, at least one tank device according to one of the preceding claims.

10. A method for the determination of a gas volume in a pressure vessel (10) of a tank device, wherein the pressure vessel has a first chamber (11) for a tank liquid (200), and also a second chamber (12), wherein the first and second chambers are closed off from one another, and are operatively connected by means of at least one vibratory membrane (13) that separates them, and wherein the method comprises:
- excitation of a pressure oscillation in the first chamber (11);
- detection of a pressure oscillation in the first and/or second chamber;
- measurement of a temperature in the pressure vessel; and
- determination of the gas volume in the pressure vessel (10) from a detected pressure oscillation and a measured temperature
**characterised in that**,
the excitation of the pressure oscillation takes place by the supply and/or the discharge of gas (300), into or out of the first chamber respectively, by means of a controllable valve (14) of the pressure vessel.

11. The method according to Claim 10, which in addition comprises a determination of a volume of tank liquid (200) in the first chamber (11), and/or a determination of a mass of the tank liquid (200) in the first chamber (11) .

12. The method according to one of the Claims 10 or 11, which in addition comprises, prior to the excitation of the pressure oscillation, an establishment of a volume of the second chamber (12).

13. The method according to one of the Claims 10 to 12, wherein the excitation of the pressure oscillation is carried out under weightlessness, micro-gravity conditions, and/or during an acceleration of a rocket containing the tank device.

14. The method according to one of the Claims 10 to 13, wherein the tank liquid (200) is a cryogenic propellant.

## Revendications

1. Dispositif de ravitaillement (100) d'un liquide à soutirer, le dispositif de ravitaillement comportant :
- un réservoir sous pression (10), à l'intérieur duquel sont conçus un premier compartiment (11) pour le liquide à soutirer (200) et un deuxième compartiment (12), le premier et le deuxième compartiments étant fermés l'un par rapport à l'autre et étant en liaison active par l'intermédiaire d'au moins une membrane (13) oscillante qui les sépare ;
- au moins un élément (14) susceptible d'être commandé, destiné à provoquer un coup de bélier dans le réservoir sous pression ;
- un capteur de pression (15), destiné à détecter une oscillation de pression résultant du coup de bélier dans le premier et/ou le deuxième compartiment ;
- un capteur de température (18), destiné à mesurer une température dans le réservoir sous pression (10) et
- un système d'évaluation (20), destiné à déterminer un volume de gaz dans le réservoir sous pression (10) à partir d'une oscillation de pression détectée et d'une température mesurée,
**caractérisé en ce que**
l'élément susceptible d'être commandé comprend une soupape susceptible d'être commandée, à travers laquelle pour provoquer un coup de bélier, on peut faire pénétrer du gaz dans le premier compartiment et/ou l'évacuer du premier compartiment.

2. Dispositif de ravitaillement selon la revendication 1, la soupape (14) susceptible d'être commandée étant raccordée sur une alimentation de gaz, pour expulser le liquide à soutirer hors du réservoir sous pression (10) ou à une sortie de gaz pour la régulation de pression, notamment pour provoquer un refroidissement du liquide à soutirer.

3. Dispositif de ravitaillement selon l'une quelconque des revendications précédentes, qui comporte par ailleurs une soupape (17) pour l'alimentation de gaz et/ou pour la sortie de gaz dans le ou hors du deuxième compartiment (12).

4. Dispositif de ravitaillement selon l'une quelconque des revendications précédentes, le système d'évaluation (20) étant aménagé par ailleurs pour déterminer un volume de liquide à soutirer (300) dans le réservoir sous pression (10).

5. Dispositif de ravitaillement selon l'une quelconque des revendications précédentes, le système d'évaluation (20) étant aménagé par ailleurs pour déterminer une masse de liquide à soutirer (200) dans le premier compartiment (10).

6. Dispositif de ravitaillement selon l'une quelconque des revendications précédentes, le liquide à soutirer (200) étant un carburant cryogénique.

7. Dispositif de ravitaillement selon l'une quelconque des revendications précédentes, le capteur de pression (15) étant conçu sous la forme d'un capteur piézoélectrique et/ou étant aménagé pour servir à l'excitation.

8. Dispositif de ravitaillement selon l'une quelconque des revendications précédentes, un carter (16) du deuxième compartiment étant fixé à l'intérieur sur le réservoir sous pression (10) ou étant une partie du réservoir sous pression (10).

9. Fusée, destinée à être propulsée dans l'espace, qui comporte un réacteur, ainsi que pour l'alimentation en carburant de celui-ci, au moins un dispositif de ravitaillement selon l'une quelconque des revendications précédentes.

10. Procédé, destiné à déterminer un volume de gaz dans un réservoir sous pression (10) d'un dispositif de ravitaillement, le réservoir sous pression comportant un premier compartiment (11) pour un liquide à soutirer (200), ainsi qu'un deuxième compartiment (12), le premier et le deuxième compartiments étant fermés l'un par rapport à l'autre et étant en liaison active par l'intermédiaire d'au moins une membrane (13) oscillante qui les sépare, et le procédé comprenant les étapes consistant à :
- exciter une oscillation de pression dans le premier compartiment (11) ;
- détecter une oscillation de pression dans le premier et/ou le deuxième compartiment ;
- mesurer une température dans le réservoir sous pression ; et
- déterminer le volume de gaz dans le réservoir sous pression (10) à partir d'une oscillation de pression détectée et d'une température mesurée,
**caractérisé en ce que**
l'excitation de l'oscillation de pression s'effectue par alimentation et/ou par évacuation de gaz (300) dans le ou à partir du premier compartiment par une soupape (14) susceptible d'être commandée du réservoir sous pression.

11. Procédé selon la revendication 10, qui comprend par ailleurs une détermination d'un volume de liquide à soutirer (200) dans le premier compartiment (11) et/ou une détermination d'une masse du liquide à soutirer (200) dans le premier compartiment (11).

12. Procédé selon l'une quelconque des revendications 10 ou 11, qui avant l'excitation de l'oscillation de pression comprend par ailleurs un établissement d'un volume du deuxième compartiment (12).

13. Procédé selon l'une quelconque des revendications 10 à 12, l'excitation de l'oscillation de pression étant réalisée sous apesanteur, sous conditions de micro-gravitation et/ou pendant une accélération d'une fusée contenant le dispositif de ravitaillement.

14. Procédé selon l'une quelconque des revendications 10 à 13, le liquide à soutirer (200) étant un carburant cryogénique.
